# EUROPÄISCHE PATENTSCHRIFT

(11) **EP 1 132 696 B1**
(45) Veröffentlichungstag und Bekanntmachung des Hinweises auf die Patenterteilung: **26.01.2005**
(21) Anmeldenummer: 01101995.7
(22) Anmeldetag: 30.01.2001
(51) Int. Cl.: F25B 43/00

(54) **Akkumulator für eine nach dem Orifice-Prinzip arbeitende Klimaanlage, insbesondere Fahrzeugklimaanlage**
Accumulator for an air conditioner working according to the "orifice" principle, in particular for a vehicle air conditioner
Accumulateur pour un appareil de climatisation travaillant selon le principe d' "orifice", en particulier pour un appareil de climatisation de véhicule

(30) Priorität: 08.03.2000 DE 20004328 U
(43) Veröffentlichungstag der Anmeldung: 12.09.2001
(73) Patentinhaber: HANSA METALLWERKE AG, 70567 Stuttgart (DE)
(72) Erfinder: Hackspacher, Franz, 70794 Filderstadt (DE)
(74) Vertreter: Ostertag, Ulrich, Dr.

(56) Entgegenhaltungen:
- EP-A- 0 972 662
- US-A- 4 458 505
- US-A- 4 627 247
- US-A- 4 675 971
- US-A- 6 125 651

## Beschreibung

Die Erfindung betrifft einen Akkumulator für eine nach dem Orifice-Prinzip arbeitende Klimaanlage, insbesondere Fahrzeugklimaanlage, mit
a) einem Gehäuse;
b) einem Strömungsabschnitt für ein Kältemittel mit einem Anfangs-Rohrabschnitt, welcher eingangsseitig mit einer Kältemittel-Zulaufleitung verbindbar ist und sich ausgangsseitig zum Gehäuseinneren öffnet, einem mittleren Rohrabschnitt, welcher eingangsseitig zum Gehäuseinneren offen und ausgangsseitig mit einem End-Rohrabschnitt in Verbindung steht, welcher wiederum ausgangsseitig mit einer Kältemittel-Ablaufleitung verbindbar ist;
wobei
die Rohrabschnitte Teil eines einstückigen Einsatzes sind; und
der Strömungsweg über eine Öffnung mit dem unteren Bereich des Innenraums des Gehäuses kommuniziert.

Ein solcher Akkumulator ist aus der US 4 458 505 bekannt. Er umfaßt ein kreiszylindrisches, längliches Gehäuse mit oberem und unterem Deckel, welches in seinem oberen Deckel zwei Durchführungen für die beiden Enden eines Stahlrohres aufweist, welches sich innerhalb des Gehäuses U-förmig erstreckt und an seinem tiefsten Punkt eine Öffnung aufweist, welche mit dem unteren Bereich des Innenraums des Gehäuses kommuniziert. Nahe dem Anfangsrohrabschnitt öffnet sich dieser zum Gehäuseinneren hin; ein Ablenkelement sorgt für eine strömungsmäßige Trennung des Kältemittelstroms zwischen Einlaß und Auslaß und Verwirbelung im Gehäuseinneren. Über das Auslaßrohr wird das Kältemittel wieder aus dem Gehäuseinneren abgeführt.

Eine Trocknung des Kältemittels ist bei dem bekannten Akkumulator nicht vorgesehen. Er hat zusätzlich noch den Nachteil, daß seine Herstellung relativ aufwendig ist. Ferner wurde festgestellt, daß die Lebensdauer des bekannten Akkumulators beschränkt ist aufgrund der relativ starken Schwingungen, denen das U-Rohr im Inneren des Akkumulatorgehäuses unterliegt.

Die vorliegende Erfindung hat daher die Aufgabe, einen Akkumulator der eingangs genannten Art so weiterzubilden, daß er leichter herzustellen ist, eine längere Lebensdauer aufweist und eine Trocknung des Kältemittels vorsieht.

Diese Aufgabe wird dadurch gelöst, daß
e) im unteren Bereich des Gehäuses ein Trockenmittel untergebracht ist;
f) der Auslaß des mittleren Rohrabschnitts mit dem Einlaß des End-Rohrabschnitts über ein Verbindungsteil verbunden ist; und
g) das Verbindungsteil mit dem einstückigen Einsatz durch eine Rastverbindung verbunden ist.

Bei einem anderen bekannten Akkumulator (US 5 282 370) ist bereits ein Trockenmittel im unteren Bereich des Gehäuses vorgesehen. Die Rohrabschnitte dieses Akkumulators sind jedoch nicht Teil eines einstückigen Einsatzes.

Die Verbindung des Auslasses des mittleren Rohrabschnitts mit dem Einlaß des End-Rohrabschnitts über ein Verbindungsteil, welches durch eine Rastverbindung mit dem einstükkigen Einsatz verbunden ist, hat gegenüber dem Stand der Technik mehrere wesentliche Vorteile:

Zum einen kann der Einsatz z.B. durch Spritzgießen in einem Schritt hergestellt werden. Dies ist möglich, weil der Auslaß des mittleren Rohrabschnitts und der Einlaß des End-Rohrabschnitts zunächst offen sind, so daß eine Ausformung ohne weiteres erfolgen kann. Das bedeutet verhältnismäßig einfache und preiswerte Werkzeuge bei zugleich geringen Materialkosten. Das Verbindungsteil kann ebenfalls ein preiswertes Spritzgußteil sein; die Rastverbindung erlaubt ein sehr einfaches Fügen.

Andererseits ist durch die Verwendung von Kunststoff bei hoher Steifigkeit die schwingungsfähige Masse gegenüber einem U-Rohr aus Stahl reduziert. Korrosion - etwa durch die Restfeuchtigkeit- spielt zudem keine Rolle.

Vorteilhafte Weiterbildungen der Erfindung sind in den Unansprüchen angegeben.

Gemäß Anspruch 2 ist die mit dem Innenraum des Gehäuses kommunizierende Öffnung in der Wand des Verbindungsteils ausgebildet. Auf diese Weise wird die Herstellung des einstückigen Einsatzes noch einfacher, ohne die des Verbindungsteils nennenswert zu komplizieren.

Bei der Weiterbildung gemäß Anspruch 3 wird vorgeschlagen, daß die Rastverbindung des Verbindungsteils mit dem Einsatz eine Clipsverbindung ist. Auch diese Maßnahme erleichtert die Herstellung des erfindungsgemäßen Akkumulators.

Ist das Trockenmittel in einem an den Einsatz angeformten Gehäuse untergebracht, entsprechend Anspruch 4, wird die Anzahl der separaten Teile weiter reduziert.

Um das Einfüllen des Trockenmittels in das angeformte Gehäuse zu ermöglichen, muß dies eine Öffnung aufweisen. Diese kann auf einfache und schnelle Weise ohne zusätzliche Teile geschlossen werden, wenn, wie in Anspruch 5 angegeben ist, das Verbindungsteil einen angeformten fluiddurchlässigen Randabschnitt umfaßt, welcher das Trockenmittelgehäuse nach unten hin begrenzt.

Besonders kompakt baut der einstückige Einsatz und somit auch der Akkumulator, wenn der Anfangs-Rohrabschnitt und/oder der End-Rohrabschnitt einen mit dem mittleren Rohrabschnitt gemeinsamen Wandabschnitt aufweisen (Anspruch 6).

In Anspruch 7 wird vorgeschlagen, daß die zum Inneren des Akkumulatorgehäuses hin zeigende Öffnung des Anfangs-Rohrabschnitts sich zumindest mit einem Bereich in azimutaler Richtung in den Innenraum öffnet, derart, daß sich in der Kältemittelströmung im oberen Bereich des Akkumulatorgehäuses ein Zyklon ausbildet. Dies erhöht den Wirkungsgrad des erfindungsgemäßen Akkumulators.

Der Wirkungsgrad wird noch stärker verbessert, wenn, wie in Anspruch 8 vorgeschlagen ist, die zum Inneren des Akkumulatorgehäuses hin zeigende Öffnung des mittleren Rohrabschnitts sich zumindest mit einem Bereich in entgegengesetzter azimutaler Richtung als die Öffnung des Anfangs-Rohrabschnitts in den Innenraum des Gehäuses öffnet.

Eine sichere Halterung für den einstückigen Einsatz wird dadurch geschaffen, daß das Akkumulatorgehäuse einen Dekkelabschnitt mit einem Einlaß und einem Auslaß für das Kältemittel aufweist, an dem sich der Einsatz direkt oder über ein Federelement abstützt. Dies ist in Anspruch 9 angegeben.

Für den Anschluß eines Akkumulators an den Kältemittelkreislauf einer Klimaanlage ist es wichtig, daß die Anschlüsse des Akkumulators voneinander etwas beabstandet sind, denn hierdurch wird dessen Montage wesentlich vereinfacht. Dies wird, ohne die Gesamtabmessungen des Akkumulators zu erhöhen, durch die Weiterbildung der Erfindung gemäß Anspruch 10 bewirkt, bei der der Anfangs-Rohrabschnitt und der End-Rohrabschnitt auf gegenüberliegenden Seiten des mittleren Rohrabschnitts angeordnet sind.

Nachfolgend werden zwei Ausführungsbeispiele der Erfindung unter Bezugnahme auf die beiliegende Zeichnung beschrieben. In der Zeichnung zeigen
- Figur 1:: einen Längsschnitt durch einen Akkumulator mit einem ersten Ausführungsbeispiel eines einstückigen Einsatz;
- Figur 2:: eine perspektivische Darstellung des Einsatzes von Figur 1;
- Figur 3:: eine Schnittansicht längs der Linie III-III von Figur 1;
- Figur 4:: eine Schnittansicht längs der Linie IV-IV von Figur 1;
- Figur 5:: eine Schnittansicht längs der Linie V-V von Figur 1;
- Figur 6:: eine perspektivische Darstellung eines zweiten Ausführungsbeispiels eines Einsatzes von schräg oben;
- Figur 7:: eine perspektivische Darstellung des Einsatzes von Figur 6 aus einem zweiten Blickwinkel von schräg oben;
- Figur 8:: eine perspektivische Darstellung des Einsatzes von Figur 6 von schräg unten;
- Figur 9:: eine Seitenansicht des Einsatzes von Figur 6;
- Figur 10:: einen Draufsicht auf den Einsatz von Figur 6;
- Figur 11:: eine Ansicht des Einsatzes von Figur 6 von unten;
- Figur 12:: einen Längsschnitt durch den Einsatz von Figur 6 längs der Linie XII-XII in Figur 10; und
- Figur 13:: einen Längsschnitt durch den Einsatz von Figur 6 längs der Linie XIII-XIII in Figur 10.

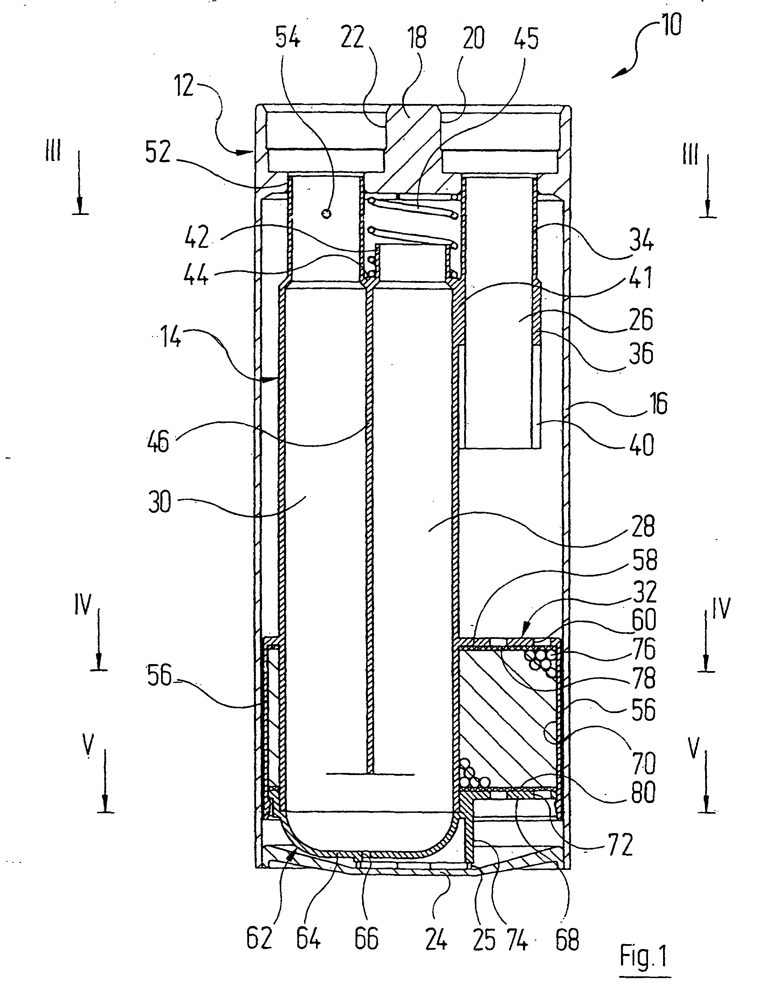

In Figur 1 trägt ein Akkumulator insgesamt das Bezugszeichen 10. Er umfaßt zunächst ein längliches, kreiszylindrisches Gehäuse 12 und einen einstückigen Einsatz 14.

Das Gehäuse 12 besteht aus einer Umfangswand 16, einem an deren oberen Rand angeformten Deckelabschnitt 18 mit einem Einlaß 20 und einem Auslaß 22 und einem separaten, etwas nach außen gestülpten und kreisförmige Grundfläche aufweisenden Bodenteil 24, welches das Gehäuse 12 nach unten hin abschließt und konzentrisch angeordnete und zum Inneren des Akkumulatorgehäuses 12 zeigende Ringstege 25 aufweist. Bei dem Einlaß 20 und dem Auslaß 22 handelt es sich um axiale, in Richtung des Innenraums des Gehäuses 12 enger werdende Stufenbohrungen, welche mit einer nicht dargestellten Kältemittel-Zulaufleitung bzw. einer nicht dargestellten Kältemittel-Ablaufleitung verbindbar sind.

Der Einsatz 14 umfaßt einen Anfangs-Rohrabschnitt 26, einen mittleren Rohrabschnitt 28 und einen End-Rohrabschnitt 30, welche zusammen mit dem Innenraum des Gehäuses 12 den Strömungsweg des Kältemittels bilden, wie weiter unten noch näher erläutert ist. Ferner umfaßt der Einsatz 14 in seinem unteren Bereich ein zylindrisches Trockenmittelgehäuse 32.

Bei dem Anfangs-Rohrabschnitt 26 handelt es sich um ein gerades Rohr mit konstantem Innendurchmesser, welches jedoch in einem oberen Endbereich 34 eine geringere Wandstärke als in einem unteren Endbereich 36 hat. Der obere Endbereich 34 des Anfangs-Rohrabschnitts 26 arbeitet, wie aus Figur 1 ersichtlich ist, in Einbaulage dicht mit dem Bereich des Einlasses 20 im Deckelabschnitt 18 des Akkumulatorgehäuses 12 zusammen, welcher den kleinsten Durchmesser aufweist. Der untere Endbereich 36 des Anfangs-Rohrabschnitts 26 weist eine Öffnung 40 auf, die sich in der in Figur 1 dargestellten Einbaulage nach unten und in azimutaler Richtung in den Innenraum des Akkumulatorgehäuses 12 öffnet, derart, daß die Ebene der senkrecht verlaufenden Ränder der Öffnung 40 in radialer Richtung verläuft. Insgesamt erstreckt sich der Anfangs-Rohrabschnitt 26 in Einbaulage vom Deckelabschnitt 18 nach unten über etwa ein Drittel der Längserstreckung des Akkumulatorgehäuses 12.

Der mittlere Rohrabschnitt 28 ist in seinem oberen Bereich an den Anfangs-Rohrabschnitt 26 angeformt, und zwar derart, daß sie einen gemeinsamen Wandabschnitt aufweisen. Ein oberer Endbereich 42 des mittleren Rohrabschnitts 28 hat einen etwas kleineren Durchmesser als der Rest des mittleren Rohrabschnitts 28, derart, daß dort ein umlaufender Absatz 44 gebildet ist. Der obere Endbereich 42 des mittleren Rohrabschnitts 28 weist eine nach oben und mit einem seitlichen Bereich entgegengesetzt zur Öffnung 40 im Anfangs-Rohrabschnitt 26 ausgerichtete Öffnung 43 auf. Zwischen dem oberen Endbereich 42 des mittleren Rohrabschnitts 28 und dem Deckelabschnitt 18 des Akkumulatorgehäuses 12 ist in der in Figur 1 dargestellten Einbaulage ein Freiraum vorhanden, in dem sich eine Schraubenfeder 45 erstreckt. Diese stützt sich in der in Figur 1 dargestellten Einbaülage einerseits am Absatz 44 des mittleren Rohrabschnitts 28 und andererseits an der Innenseite des Deckelabschnitts 18 ab. Der mittlere Rohrabschnitt 28 erstreckt sich koaxial zur Längsachse des Akkumulatorgehäuses 12 durch das Trockenmittelgehäuse 32 bis auf Höhe von dessen unterem Ende.

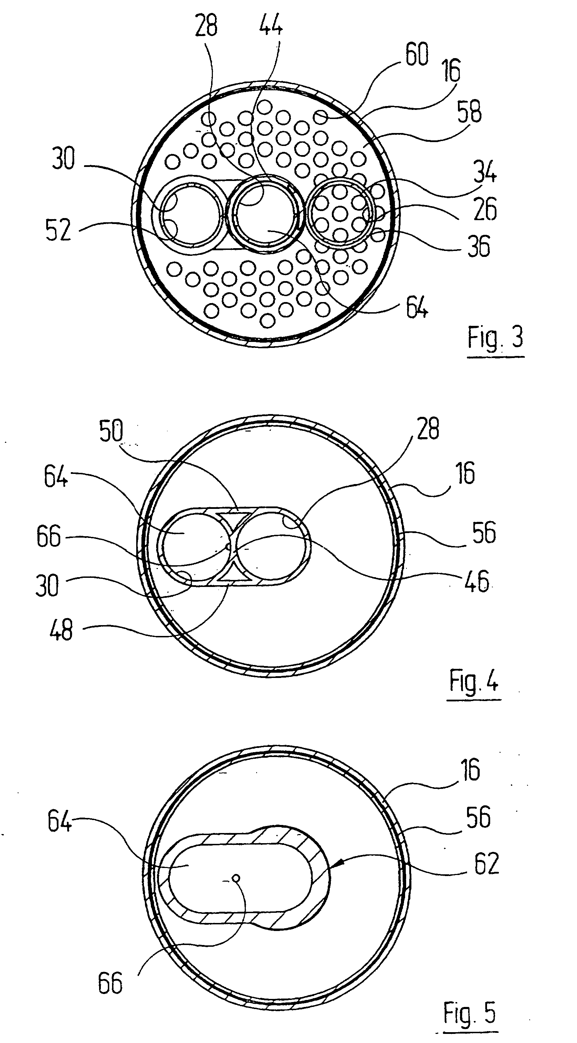

Der End-Rohrabschnitt 30 ist fast identisch zum mittleren Rohrabschnitt 28 ausgebildet. Er verläuft zu diesem parallel und ist so an ihn angeformt, daß er einen mit dem mittleren Rohrabschnitt 28 gemeinsamen Wandabschnitt 46 aufweist (vgl. Figur 4). Zur Erhöhung der Steifigkeit erstreckt sich darüber hinaus im Bereich des Trockenmittelgehäuses 32 vom mittleren Rohrabschnitt 28 auf beiden Seiten des gemeinsamen Wandabschnitts 46 jeweils eine Verbindungswand 48 bzw. 50 zum End-Rohrabschnitt 30. Der End-Rohrabschnitt 30 und der Anfangs-Rohrabschnitt 26 sind auf gegenüberliegenden Seiten des mittleren Rohrabschnitts 28 angeordnet, so daß alle drei Rohrabschnitte 26, 28 und 30 in einer Ebene nebeneinander liegen.

Der End-Rohrabschnitt 30 weist einen oberen Endbereich 52 auf, dessen Durchmesser kleiner ist als der restliche Bereich des End-Rohrabschnitts 30. Im Gegensatz zum mittleren Rohrabschnitt 28 ist der obere Endbereich 52 des End Rohrabschnitts 30 jedoch bis zum Deckelabschnitt 18 des Akkumulatorgehäuses 12 hochgezogen und steckt in Einbaulage dicht in dem Bereich des Auslasses 22, welcher den kleinsten Durchmesser hat. Im oberen Endbereich 52 des End-Rohrabschnitts 30 ist ferner eine Gasansaugbohrung 54 vorhanden.

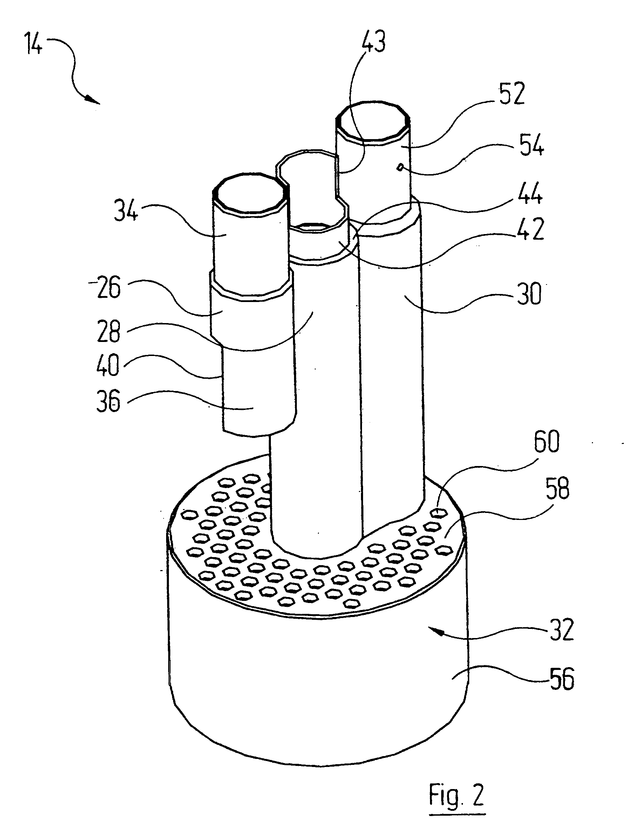

Wie insbesondere aus Figur 2 ersichtlich ist, handelt es sich bei dem Trockenmittelgehäuse 32 um ein kreiszylindrisches Teil mit oberen Stirnwand 58 und einer sich von deren radial äußerem Rand nach unten erstreckenden Umfangswand 56. Die Umfangswand 56 ist an die Stirnwand 58 und diese wiederum an den mittleren Rohrabschnitt 28 und den End-Rohrabschnitt 30 angeformt. In der Stirnwand 58 ist eine Vielzahl von Öffnungen 60 vorhanden, so daß diese fluid-durchlässig ist. Der Außendurchmesser des Trockenmittelgehäuses 32 ist etwas kleiner als der Innendurchmesser der Umfangswand 16 des Akkumulatorgehäuses 12, so daß zwischen diesen beiden Teilen ein Spalt vorhanden ist. Die Umfangswand 56 des Trockenmittelgehäuses 32 reicht in etwa bis auf Höhe des unteren Randes des mittleren Rohrabschnitts 28 bzw. des End-Rohrabschnitts 30.

Die unteren offenen Enden des mittleren Rohrabschnitts 28 und des End-Rohrabschnitts 30 sind durch ein schüsselförmiges Verbindungsteil 62 miteinander verbunden, dessen Form besonders gut aus den Figuren 1 und 5 ersichtlich ist. In einem ebenen Bodenabschnitt 64 des Verbindungsteils 62 ist eine Öffnung 66 vorhanden. Das Verbindungsteil 62 weist ferner einen sich radial nach außen erstreckenden Randabschnitt 68 auf, der so ausgebildet ist, daß er in Einbaulage das Trockenmittelgehäuse 32 nach unten hin begrenzt, wodurch ein Ringraum 70 geschaffen wird. Der Randabschnitt 68 des Verbindungsteils 62 ist in Einbaulage mit der Umfangeswand 56 des Trockenmittelgehäuses 32 in deren unterem Bereich verclipst. In dem Randabschnitt 68 des Verbindungsteils 62 sind ebenfalls Öffnungen 72 vorhanden, so daß dieser ebenfalls fluiddurchlässig ist. An das Verbindungsteil 62 ist schließlich ein sich koaxial zur Längsachse des Akkumulators 10 erstreckender Stützring 74 angeformt.

Der zwischen der Stirnwand 58 und der Umfangswand 56 des Trockenmittelgehäuses 32 und dem unteren Bereich des End-Rohrabschnitts 30 bzw. des mittleren Rohrabschnitts 28 und dem Randabschnitt 68 des Verbindungsteils 62 gebildete Ringraum 70 ist mit Trockenmittel 76 gefüllt, bei dem es sich z.B. ein stark hygroskopisches Granulat handeln kann. Um zu verhindern, daß das Trockenmittel 76 durch die Öffnungen 60 in der Stirnwand 58 des Trockenmittelgehäuses 32 sowie die Öffnungen 72 im Randabschnitt 68 des Verbindungsteils 62 heraustritt, ist jeweils zwischen dem Trockenmittel 76 und dem Randabschnitt 68 bzw. der Stirnwand 58 ein ringförmiges Vliesstück 78 bzw. 80 angeordnet.

Der Akkumulator 10 wird folgendermaßen montiert:

Zunächst wird das obere Vliesstück 78 vom Ringraum 70 aus auf die Stirnwand 58 des Trockenmittelgehäuses 32 aufgelegt. Dann wird der Ringraum 70 des Trockenmittelgehäuses 32 mit Trockenmittel 76 gefüllt, das untere Vliesstück 80 eingelegt und das Verbindungsteil 62 mit seinem Randabschnitt 68 mit dem unteren Bereich der Umfangswand 56 des Trockenmittelgehäuses 32 verclipst. Dabei wird das Verbindungsteil 62 gegen die unteren Ränder des mittleren Rohrabschnitts 28 bzw. des End-Rohrabschnitts 30 verspannt und auf diese Weise dicht mit diesen verbunden. Jetzt wird die Spiralfeder 45 auf den oberen Endbereich 42 des mittleren Rohrabschnitts 28 aufgeschoben, bis sie am Absatz 44 zwischen dem oberen Endbereich 42 und dem Rest des mittleren Rohrabschnitts 28 aufliegt.

Dann wird der Einsatz 14 von unten in das Akkumulatorgehäuse 12 so eingeführt, daß der obere Endbereich 34 des Anfangs-Rohrabschnitts 26 und der obere Endbereich 52 des End-Rohrabschnitts 30 in den Einlaß 20 bzw. den Auslaß 22 im Deckelabschnitt 18 des Akkumulatorgehäuses 12 eingeschoben werden. Dabei kommt die Spiralfeder 45 in Anlage an den Deckelabschnitt 18. Da der Außendurchmesser der Umfangswand 56 des Trockenmittelgehäuses 32 etwas kleiner ist als der Innendurchmesser der Umfangswand 16 des Akkumulatorgehäuses 12, verbleibt zwischen-diesen beiden Teilen einer konzentrischer Spalt. Nun wird das Bodenteil 24 so eingesetzt, daß dessen Ringstegabschnitte 25 am Stützring 74 des Verbindungsteils 62 anliegen und hierdurch den gesamten Einsatz 14 in axialer Richtung entgegen der Spiralfeder 45 beaufschlagen. Das Bodenteil 24 wird in Einbaulage mit der Umfangswand 16 des Akkumulatorgehäuses 12 verklebt oder verschweißt.

Der Betrieb des Akkumulators 10 erfolgt folgendermaßen:

Im Betrieb wird vom Verdampfer kommendes Kältemittel, welches eine flüssige und eine gasförmige Phase enthält, dem Innenraum des Gehäuses 12 des Akkumulators 10 über den Einlaß 20 im Deckelabschnitt 18 und den Anfangs-Rohrabschnitt 26 zugeführt. Aus dem Anfangs-Rohrabschnitt 26 tritt das Kältemittel durch die Öffnung 40 mit einer azimutalen Komponente aus, derart, daß sich im Zwischenraum zwischen den Rohrabschnitten 26, 28 und 30 und der Umfangswand 16 des Akkumulatorgehäuses eine zyklonartige Strömung bildet. Hierdurch und durch die entsprechende Verwirbelung kommt es zu einer Trennung der flüssigen Phase und der gasförmigen Phase des Kältemittels. Die flüssige Phase schlägt sich an der Umfangswand 16 des Akkumulatorgehäuses 12 nieder und fließt aufgrund der Schwerkraft durch den zwischen dem zylindrischen Trockenmittelgehäuse 32 und der Umfangswand 16 des Akkumulatorgehäuses 12 gebildeten Spalt nach unten.

Das in dem Kältemittel außerdem enthaltene Öl sinkt aufgrund seines größeren spezifischen Gewichtes nach unten weiter ab und tritt in den Zwischenraum zwischen dem Verbindungsteil 62 und dem Bodenteil 24 ein, wo es einen Ölsumpf bildet.

Die Gasphase des Kältemittels kommt im Verlauf der Zyklonströmung auch in Kontakt mit dem Trockenmittel 76 im Trokkenmittelgehäuse 32 und wird durch dieses von der in ihm enthaltenen Feuchtigkeit im wesentlichen befreit. Die getrocknete Gasphase des Kältemittels gelangt über die Öffnung im oberen Endbereich 42 des mittleren Rohrabschnitts 28 in diesen hinein und strömt in ihm nach unten. Im Bereich des Verbindungsteils 62 wird die Kältemittelströmung umgelenkt und gelangt in den End-Rohrabschnitt 30.

Aufgrund des Abstandes zwischen der Unterseite des Bodenabschnitts 64 des Verbindungsteils 62 und dem nach außen gewölbten Bodenteil 24 gelangt das Öl auch in den Bereich zwischen diesen beiden Elementen. Von dort strömt es nach dem Prinzip der "kommunizierenden Röhren" durch die kleine Öffnung 66 im Bodenabschnitt 64 des Verbindungsteils 62 hindurch und bildet auf dem ebenen Bodenabschnitt 64 des Verbindungsteils 62 einen Ölspiegel. Dieser wird von dem vorbeistreichenden Kältemittel als Ölfilm auf der Innenseite des Verbindungsteils 62 in Richtung des End-Rohrabschnittes 30 nach oben getrieben. Von dort gelangt das getrocknete gasförmige Kältemittel und das mitgeführte Öl zum Auslaß 22 und weiter in die nicht dargestellte Kältemittel-Ablaufleitung.

Auf diese Weise bilden der Anfangs-Rohrabschnitt 26, der obere Bereich des Innenraums des Akkumulatorgehäuses 12, der mittlere Rohrabschnitt 28 und der End-Rohrabschnitt 30 einen Strömungsweg für das Kältemittel. Dabei ist der Einsatz 14 aufgrund seiner Einstückigkeit so steif, daß schädliche Schwingungen und Klappergeräusche vermieden werden. Aufgrund der unmittelbar nebeneinander liegenden Rohrabschnitte 26, 28 und 30 baut der Akkumulator ferner sehr kompakt, wobei sein Anschluß an den Kältemittelkreislauf dennoch aufgrund des vom Einlaß 20 ausreichend beabstandeten Auslasses 22 leicht möglich ist. Dies wird wiederum durch die entsprechende Positionierung des AnfangsRohrabschnitts 26 und des End-Rohrabschnitts 30 gegenüber dem mittleren Rohrabschnitt 28 ermöglicht.

Da das abgeschiedene flüssige Kältemittel leichter ist als Öl, bildet sich mit der Zeit ein über dem Ölspiegel liegender Kältemittelspiegel. Beim Anfahren der Klimaanlage aus dem Stillstand besteht nun die Gefahr, daß dieses stehende flüssige Kältemittel schlagartig mitgerissen wird und in den weiteren Kreislauf gelangt. Um dies zu vermeiden, ist die Gasansaugbohrung 54 im oberen Endbereich 52 des End-Rohrabschnitts 30 vorgesehen. Beim Anfahren der Klimaanlage wird so ausschließlich gasförmiges Kältemittel aus dem Innenraum des Akkumulatorgehäuses 12 angesaugt und ein Ansaugen von flüssigem Kältemittel vermieden.

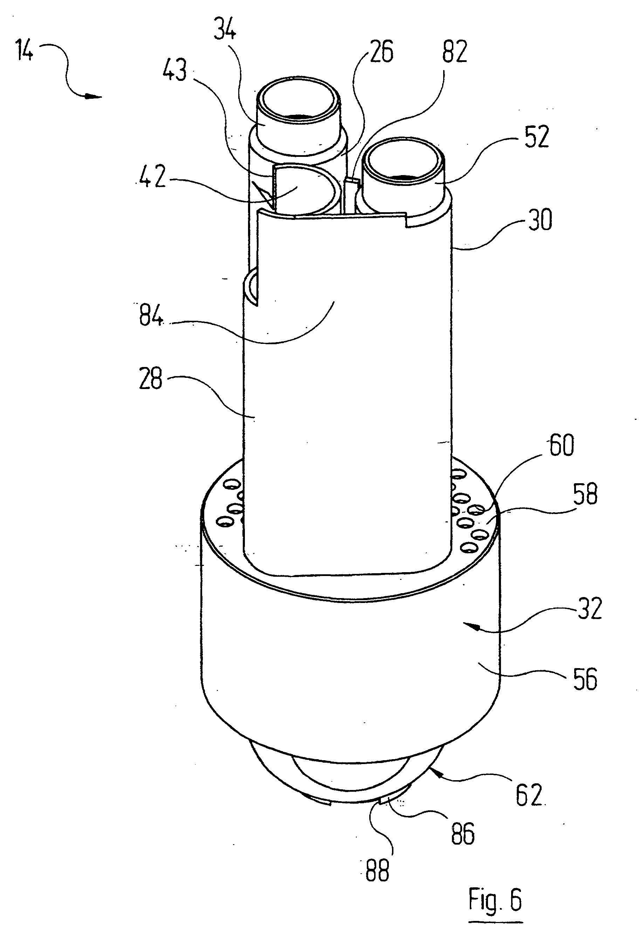

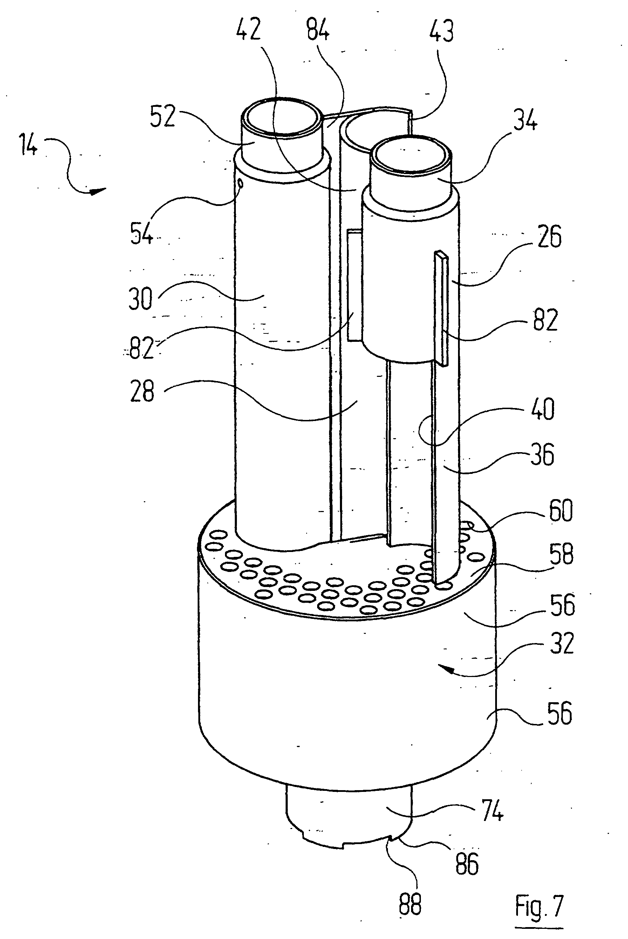

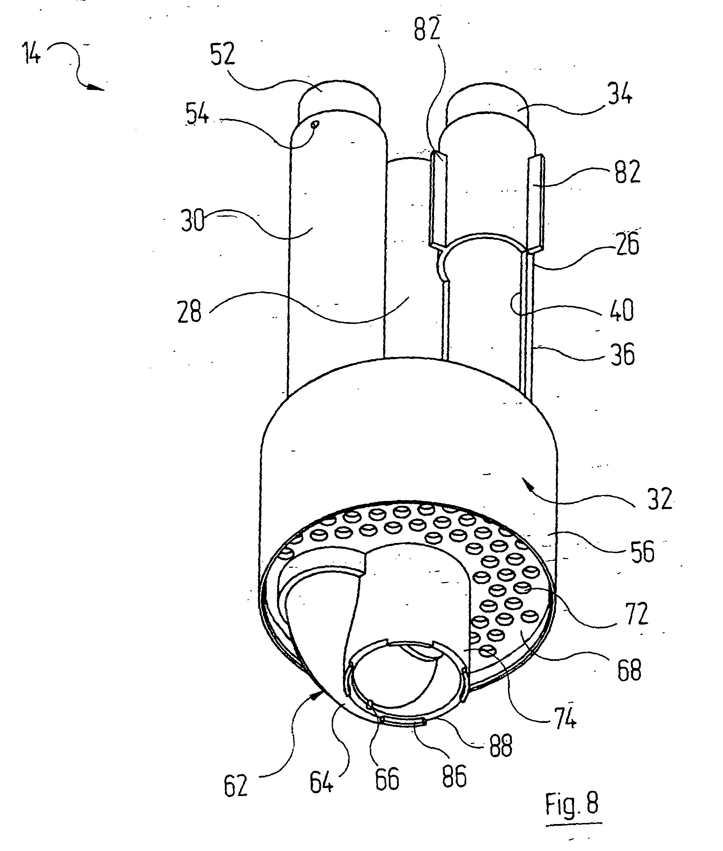

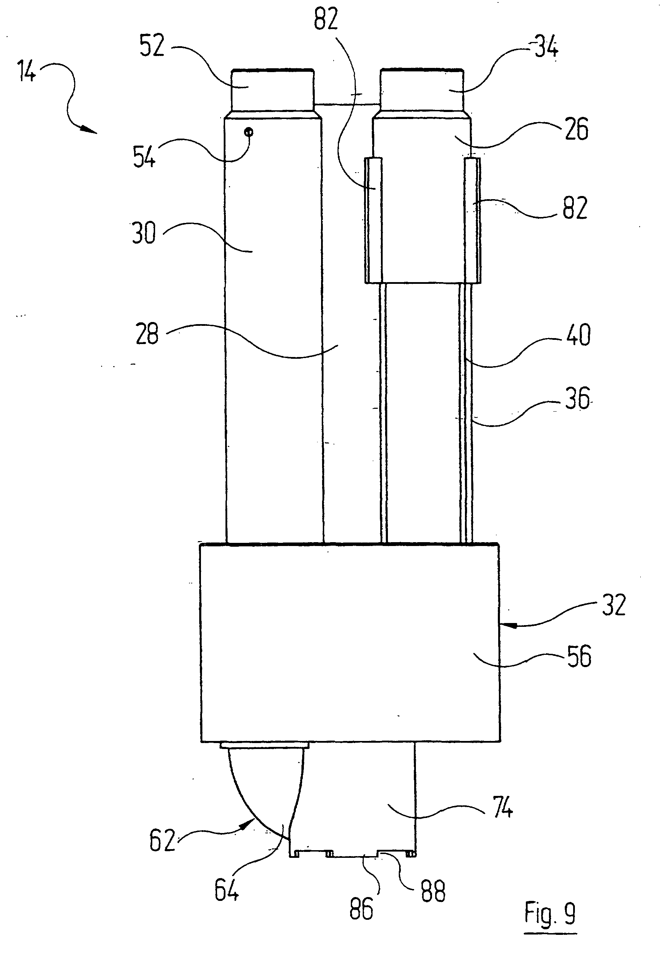

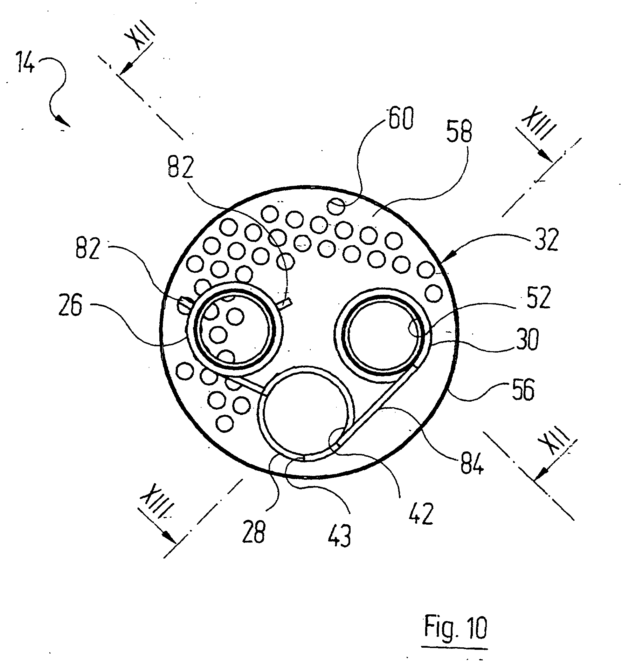

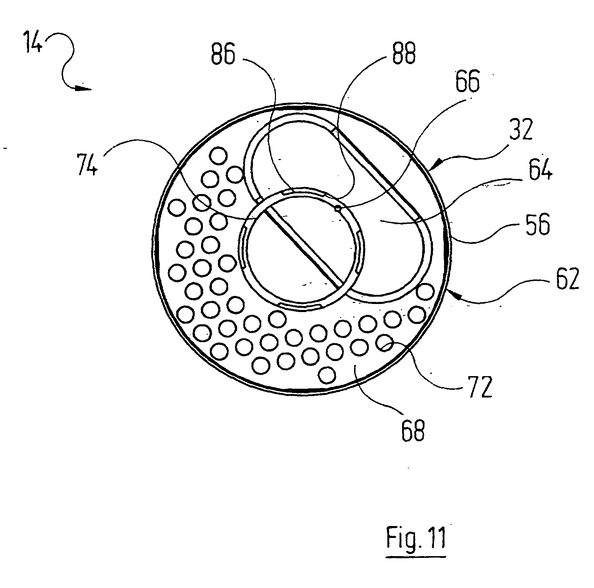

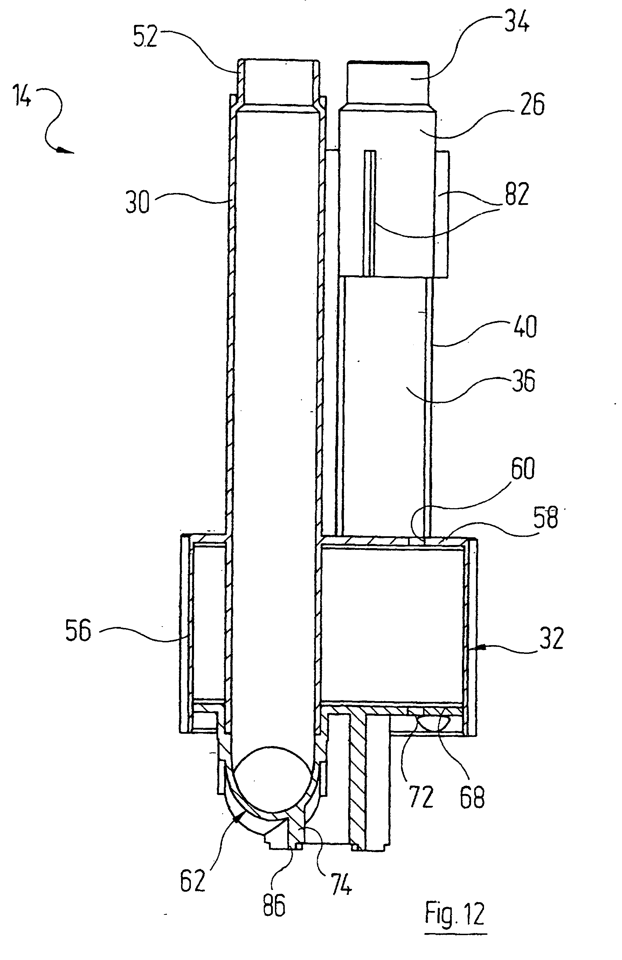

Nun wird ein zweites Ausführungsbeispiel eines Einsatzes unter Bezugnahme auf die Figuren 6 bis 13 erläutert. Teile, welche funktionsäquivalent zu Teilen des ersten Ausführungsbeispiels sind, tragen die gleichen Bezugszeichen und sind hier nicht nochmals im Detail erläutert. Nachfolgend wird nur auf die wesentlichen Unterschiede zum ersten Ausführungsbeispiel eingegangen.

Zunächst fällt auf, daß die Rohrabschnitte 26, 28 und 30 nicht nebeneinander in einer Ebene liegen, sondern in Richtung ihrer Längsachsen gesehen ein Dreieck bilden. Hierdurch wird eine noch kleinere radiale Abmessung des Einsatzes 14 und somit des Akkumulators ermöglicht. Ferner erstreckt sich der untere Endbereich 36 des Anfangs-Rohrabschnitts 26 mit der Öffnung 40 nach unten bis zum Trockenmittelgehäuse 32. Oberhalb der Öffnung 40 sind an den Anfangs-Rohrabschnitt 26 zwei sich radial erstreckende und vom Rand der Öffnung 40 bis in die Nähe des oberen Endbereichs 34 verlaufende Rippen 82 angeformt.

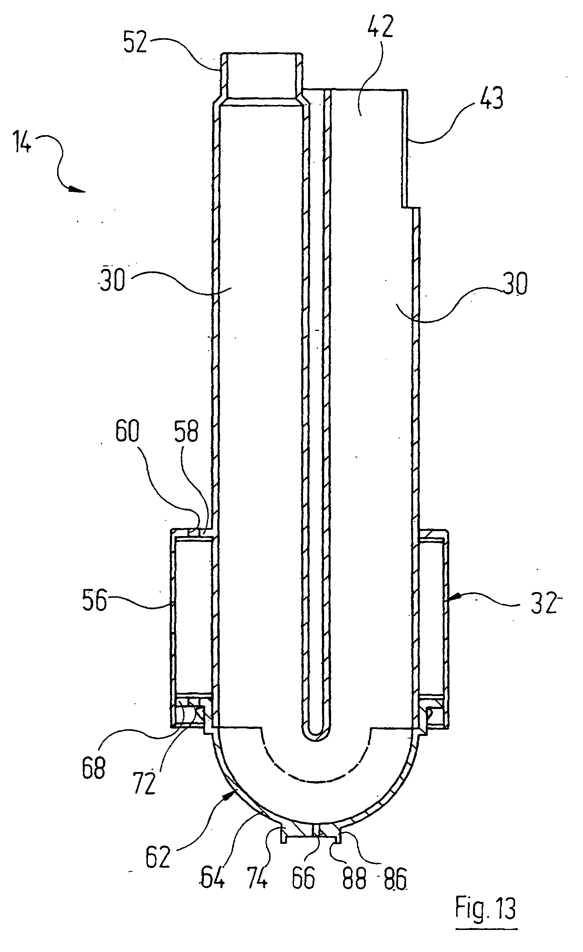

Der mittlere Rohrabschnitt 28 und der End-Rohrabschnitt 30 sind voneinander etwas beabstandet. Hierdurch ergibt sich im Verbindungsbereich zwischen den beiden Abschnitten 28 und 30 eine weniger scharfe Strömungsumlenkung und eine insgesamt bessere Strömungssituation (Figur 13). Die Außenwände der Rohrabschnitte 28 und 30 sind durch eine tangential angeformte Verbindungswand 84 miteinander verbunden, durch die im Betrieb die Strömung des Kältemittels innerhalb des Gehäuses (nicht dargestellt) zusätzlich geführt wird. Die Verbindungswand 84 erstreckt sich in Längsrichtung des Einsatzes 14 vom oberen Rand des mittleren Rohrabschnitts 28 bis zum Trockenmittelgehäuse 32.

Der Bodenabschnitt 64 des Verbindungsteils 62 ist im Gegensatz zum dem des ersten Ausführungsbeispiels gleichförmig gebogen ausgeführt (Figur 13), was ebenfalls zu einer gleichmäßigen und somit verlustarmen Strömungsführung beiträgt. Ferner weist der Stützring 74 des Verbindungsteils 62 an seinem unteren Rand Stegabschnitte 86 auf, zwischen denen Freiräume 88 vorhanden sind.

Der Einbau des in den Figuren 6 bis 13 dargestellten Einsatzes 16 in ein Gehäuse erfolgt ähnlich wie beim ersten Ausführungsbeispiel. Gleiches gilt auch für seine Funktionsweise.

## Patentansprüche

1. Akkumulator (10) für eine nach dem Orifice-Prinzip arbeitende Klimaanlage, insbesondere Fahrzeugklimaanlage, mit
a) einem Gehäuse (12);
b) einem Strömungsweg für ein Kältemittel mit einem Anfangs-Rohrabschnitt (26), welcher eingangsseitig mit einer Kältemittel-Zulaufleitung verbindbar ist und sich ausgangsseitig zum Gehäuseinneren öffnet, einem mittleren Rohrabschnitt (28), welcher eingangsseitig zum Gehäuseinneren offen und ausgangsseitig mit einem End-Rohrabschnitt (30) in Verbindung steht, welcher wiederum ausgangsseitig mit einer Kältemittel-Ablaufleitung verbindbar ist;
wobei
c) die Rohrabschnitte Teil eines einstückigen Einsatzes (14) sind; und
d) der Strömungsweg über eine Öffnung (66) mit dem unteren Bereich des Innenraums des Gehäuses kommuniziert;
**dadurch gekennzeichnet, daß**
e) im unteren Bereich des Gehäuses (12) ein Trockenmittel (76) untergebracht ist;
f) der Auslaß des mittleren Rohrabschnitts (28) mit dem Einlaß des End-Rohrabschnitts (30) über ein Verbindungsteil (62) verbunden ist; und
g) das Verbindungsteil (62) mit dem einstückigen Einsatz (14) durch eine Rastverbindung verbunden ist.

2. Akkumulator nach Anspruph 1, **dadurch gekennzeichnet, daß** die mit dem Innenraum des Gehäuses (12) kommunizierende Öffnung (66) in der Wand (64) des Verbindungsteils (62) ausgebildet ist.

3. Akkumulator nach Anspruch 1 oder 2, **dadurch gekennzeichnet, daß** die Rastverbindung eine Clipsverbindung ist.

4. Akkumulator nach einem der vorhergehenden Ansprüche, **dadurch gekennzeichnet, daß** das Trockenmittel (76) in einem an den Einsatz (14) angeformten Gehäuse (32) untergebracht ist.

5. Akkumulator nach Anspruch 4, **dadurch gekennzeichnet, daß** das Verbindungsteil (62) einen angeformten fluiddurchlässigen Randabschnitt (68) umfaßt, welcher das Trokkenmittelgehäuse (32) nach unten hin begrenzt.

6. Akkumulator nach einem der vorhergehenden Ansprüche, **dadurch gekennzeichnet, daß** der Anfangs-Rohrabschnitt (26) und/oder der End-Rohrabschnitt (30) einen mit dem mittleren Rohrabschnitt (28) gemeinsamen Wandabschnitt (46) aufweisen.

7. Akkumulator nach einem der vorhergehenden Ansprüche, **dadurch gekennzeichnet, daß** die zum Inneren des Akkumulatorgehäuses (12) hin zeigende Öffnung (40) des Anfangs-Rohrabschnitts (26) sich zumindest mit einem Bereich in azimutaler Richtung in den Innenraum öffnet, derart, daß sich in der Kältemittelströmung im oberen Bereich des Akkumulatorgehäuses (12) ein Zyklon ausbildet.

8. Akkumulator nach Anspruch 7, **dadurch gekennzeichnet, daß** die zum Inneren des Akkumulatorgehäuses (12) hin zeigende Öffnung des mittleren Rohrabschnitts (28) sich zumindest mit einem Bereich in entgegengesetzter azimutaler Richtung als die Öffnung (40) des Anfangs-Rohrabschnitts (26) in den Innenraum des Gehäuses öffnet.

9. Akkumulator nach einem der vorhergehenden Ansprüche, **dadurch gekennzeichnet, daß** das Akkumulatorgehäuse (12) einen Deckelabschnitt (18) mit einem Einlaß (20) und einem Auslaß (22) für das Kältemittel aufweist, an dem sich der Einsatz (14) direkt oder über ein Federelement (45) abstützt.

10. Akkumulator nach einem der vorhergehenden Ansprüche, **dadurch gekennzeichnet, daß** der Anfangs-Rohrabschnitt (26) und der End-Rohrabschnitt (30) auf gegenüberliegenden Seiten des mittleren Rohrabschnitts (28) angeordnet sind.

## Claims

1. Accumulator (10) for an air conditioner working according to the "orifice" principle, in particular for a vehicle air conditioner,
with
a) a housing (12),
b) a flow path for a cooling agent with a beginning pipe section (26), which on the inlet side can be connected to a cooling agent delivery line, and which opens on the outlet side to the housing interior, a middle pipe section (28), which on the inlet side is open to the housing interior and on the outlet side is connected to an end pipe section (30), which in turn can be connected on the outlet side to a cooling agent outlet line;
wherein
c) the pipe sections are part of a single-piece insert (14); and
d) the flow path communicates via an orifice (66) with the lower area of the interior of the housing;
**characterised in that**
e) a drying means (76) is located in the lower area of the housing (12);
f) the outlet of the middle pipe section (28) is connected to the inlet of the end pipe section (30) via a connecting part (62); and
g) the connecting part (62) is connected to the single-piece insert (14) by means of a locking engagement connection.

2. Accumulator according to Claim 1, **characterised in that** the orifice (66) communicating with the interior of the housing (12) is formed in the wall (64) of the connecting part (62).

3. Accumulator according to Claim 1 or 2, **characterised in that** the locking engagement connection is a clip connection.

4. Accumulator according to any one of the foregoing Claims, **characterised in that** the drying agent (76) is located in a housing (32) moulded to the insert (14).

5. Accumulator according to Claim 4, **characterised in that** the connecting part (62) comprises a fluid-permeable edge section (68) moulded to the connecting piece (62), which delimits the drying means housing (32) downwards.

6. Accumulator according to one of the foregoing Claims, **characterised in that** the beginning pipe section (26) and/or the end pipe section (30) has a common wall section (46) with the middle pipe section (28).

7. Accumulator according to one of the foregoing Claims, **characterised in that** the orifice (40) of the beginning pipe section (26), pointing to the interior of the accumulator housing (12), opens into the interior with at least one area in the azimuth direction, in such a way that in the cooling agent flow a cyclone is formed in the upper area of the accumulator housing (12).

8. Accumulator according to Claim 7, **characterised in that** the orifice of the middle pipe section (28), pointing towards the interior of the accumulator housing (12), opens with at least one area in the azimuth direction opposed to the orifice (40) of the beginning pipe section (26) into the interior of the housing.

9. Accumulator according to any one of the foregoing Claims, **characterised in that** the accumulator housing (12) has a cover section (18) with an inlet (20) and an outlet (22) for the cooling agent, at which the insert (14) is supported directly or by means of a spring element (45).

10. Accumulator according to any one of the foregoing Claims, **characterised in that** the beginning pipe section (26) and the end pipe section (30) are arranged on opposing sides of the middle pipe section (28).

## Revendications

1. Accumulateur (10) pour un appareil de climatisation fonctionnant selon le principe de l'orifice, en particulier pour un appareil de climatisation de véhicule, avec
a) un boîtier (12) ;
b) un chemin d'écoulement pour un fluide réfrigérant comprenant une section de tube initiale (26) qui peut être reliée côté entrée à une conduite d'arrivée de fluide réfrigérant et qui s'ouvre côté sortie vers l'intérieur du boîtier, une section de tube intermédiaire (28) qui s'ouvre côté entrée vers l'intérieur du boîtier et est reliée côté sortie à une section de tube finale (30), laquelle peut être reliée côté sortie à une conduite de sortie de fluide réfrigérant ;
dans lequel
c) les sections de tube font partie d'un insert en une pièce (14) ; et
d) le chemin d'écoulement communique par une ouverture (66) avec la partie inférieure de l'intérieur du boîtier ;
**caractérisé par** le fait
e) qu'un agent desséchant (76) est logé dans la partie inférieure du boîtier (12) ;
f) que la sortie de la section de tube intermédiaire (28) est reliée à l'entrée de la section de tube finale (30) par une pièce de liaison (62) ; et
g) que la pièce de liaison (62) est reliée à l'insert en une pièce (14) par un assemblage à enclenchement.

2. Accumulateur selon la revendication 1, **caractérisé par le fait que** l'ouverture (66) communiquant avec l'intérieur du boîtier (12) est réalisée dans la paroi (64) de la pièce de liaison (62).

3. Accumulateur selon la revendication 1 ou 2, **caractérisé par le fait que** l'assemblage à enclenchement est un assemblage à clips.

4. Accumulateur selon l'une des revendications précédentes, **caractérisé par le fait que** l'agent desséchant (76) est logé dans un boîtier (32) formé sur l'insert (14).

5. Accumulateur selon la revendication 4, **caractérisé par le fait que** la pièce de liaison (62) comprend une section marginale formée (68) perméable aux fluides qui limite le boîtier d'agent desséchant (32) vers le bas.

6. Accumulateur selon l'une des revendications précédentes, **caractérisé par le fait que** la section de tube initiale (26) et/ou la section de tube finale (30) présentent une section de paroi (46) commune avec la section de tube intermédiaire (28).

7. Accumulateur selon l'une des revendications précédentes, **caractérisé par le fait que** l'ouverture (40) dirigée vers l'intérieur du boîtier d'accumulateur (12) de la section de tube initiale (26) s'ouvre au moins par une zone en direction azimutale dans l'intérieur du boîtier, de telle sorte qu'il se forme un cyclone dans le courant de fluide réfrigérant dans la partie supérieure du boîtier d'accumulateur (12).

8. Accumulateur selon la revendication 7, **caractérisé par le fait que** l'ouverture dirigée vers l'intérieur du boîtier d'accumulateur (12) de la section de tube intermédiaire (28) s'ouvre au moins par une zone en direction azimutale opposée à celle de l'ouverture (40) de la section de tube initiale (26) dans l'intérieur du boîtier.

9. Accumulateur selon l'une des revendications précédentes, **caractérisé par le fait que** le boîtier d'accumulateur (12) présente une section de couvercle (18) avec une entrée (20) et une sortie (22) pour le fluide réfrigérant, sur laquelle l'insert (14) s'appuie directement ou par l'intermédiaire d'un élément à ressort (45).

10. Accumulateur selon l'une des revendications précédentes, **caractérisé par le fait que** la section de tube initiale (26) et la section de tube finale (30) sont disposées sur des côtés opposés de la section de tube intermédiaire (28).
